# EUROPÄISCHE PATENTSCHRIFT

(11) **EP 4 204 780 B1**
(45) Veröffentlichungstag und Bekanntmachung des Hinweises auf die Patenterteilung: **26.03.2025**
(21) Anmeldenummer: 21746432.0
(22) Anmeldetag: 16.07.2021
(51) Int. Cl.: G01K 1/08, G01K 1/14, G01K 13/00, G01K 13/02

(54) **SCHUTZROHR FÜR KRYOGENE ANWENDUNGEN**
PROTECTIVE TUBE FOR CRYOGENIC APPLICATIONS
TUBE PROTECTEUR POUR APPLICATIONS CRYOGÉNIQUES

(30) Priorität: 28.08.2020 DE 102020122567
(43) Veröffentlichungstag der Anmeldung: 05.07.2023
(73) Patentinhaber: Endress+Hauser Wetzer GmbH+Co. KG, 87484 Nesselwang (DE)
(72) Erfinder: SAECKER, Dietmar, 87484 Nesselwang (DE)
(74) Vertreter: Endress + Hauser Group Services (Deutschland) AG+Co. KG
(86) Internationale Anmeldenummer: PCT/EP2021/070012
(87) Internationale Veröffentlichungsnummer: WO 2022/042941

(56) Entgegenhaltungen:
- DE-A1- 2 549 619
- JP-A- 2002 310 806

## Beschreibung

Die vorliegende Erfindung betrifft eine Anordnung umfassend ein Behältnis mit einem darin angeordneten Medium und eine Vorrichtung zur Bestimmung und/oder Überwachung zumindest einer Prozessgröße des Mediums in dem Behältnis, mit einem Messeinsatz, welcher der Bestimmung und/oder Überwachung der Prozessgröße dient und mit einem Schutzrohr. Bei dem Behältnis handelt es sich beispielsweise um einen Behälter oder um eine Rohrleitung.

Schutzrohre dienen beispielsweise dazu, Messeinsätze von Feldgeräten, welche der Bestimmung und/oder Überwachung einer oder mehrerer, insbesondere physikalischer oder chemischer, Prozessgrößen eines Mediums, insbesondere eines Fluids, herangezogen werden, in ein Behältnis einzubringen. Es handelt sich dabei in der Regel um zumindest teilweise in das Medium eintauchende Eintauchkörper, welche zur Aufnahme des Messeinsatzes ausgestaltet sind und beispielsweise eine zentrale Bohrung oder ein Sackloch aufweisen, in welche/welches der Messeinsatz einbringbar ist. Das Schutzrohr erfüllt dann im Prinzip die Funktion eines Gehäuses. Die Schutzrohre selbst werden dabei typischerweise in einen Stutzen des Behältnisses oder eines Messrohrs, welches in eine Rohrleitung integrierbar ist, eingebracht.

Eine beispielhafte Anwendung für Schutzrohre im Bereich von Feldgeräten betrifft Schutzrohre für Thermometer, welche häufig und insbesondere im Falle einer invasiven Temperaturbestimmung verwendet werden, um einen den jeweiligen Temperatursensor enthaltenden Messeinsatz vor dem jeweiligen Medium zu schützen. Obgleich die vorliegende Erfindung auch auf andere Arten von Feldgeräten anwendbar ist, bezieht sich die nachfolgende Beschreibung beispielhaft auf die Temperaturmesstechnik.

Thermometer sind in unterschiedlichsten Ausgestaltungen aus dem Stand der Technik bekannt geworden und deren zugrundeliegende Messprinzipien sind jeweils ebenfalls ausführlich beschrieben worden. So gibt es Thermometer, welche zur Messung der Temperatur die Ausdehnung einer Flüssigkeit, eines Gases oder eines Festkörpers mit bekanntem Ausdehnungskoeffizienten heranziehen, oder auch solche, welche die elektrische Leitfähigkeit eines Materials mit der Temperatur in Zusammenhang bringen, wie beispielsweise bei Verwendung von Widerstandselementen oder Thermoelementen. Dagegen wird bei Strahlungsthermometern, insb. Pyrometern, zur Bestimmung der Temperatur einer Substanz deren Wärmestrahlung ausgenutzt.

Bei einem Temperatursensor in Form eines sogenannten Dünnschicht-Sensors, insbesondere eines Resistance Temperature Detectors (RTD), kommt beispielsweise ein mit Anschlussdrähten versehenes und auf ein Trägersubstrat aufgebrachtes Sensorelement zum Einsatz, wobei die Rückseite des Trägersubstrats in der Regel metallisch beschichtet ist. Als Sensorelemente werden dabei sogenannte Widerstandselemente, welche beispielsweise durch Platinelemente gegeben sind, verwendet, die unter anderem unter den Bezeichnungen PT10, PT100, und PT1000 auch kommerziell erhältlich sind.

Bei Temperatursensoren in Form von Thermoelementen wiederum wird die Temperatur durch eine Thermospannung bestimmt, die zwischen den einseitig angeschlossenen Thermodrähten aus unterschiedlichen Materialien entsteht. Zur Temperaturmessung werden üblicherweise Thermoelemente nach DIN-Norm IEC584, z.B. Thermoelemente vom Typ K, J, N, S, R, B, T oder E, als Temperaturfühler eingesetzt. Aber auch andere Materialpaare, insbesondere solche mit einem messbaren Seebeck-Effekt, sind möglich.

Die Genauigkeit der Temperaturmessung hängt empfindlich von den jeweiligen thermischen Kontakten und der jeweils vorherrschenden Wärmeleitung ab. Die Wärmeströme zwischen dem Medium, dem Behältnis, in welchem sich das Mediums befindet, dem Thermometer, dem Schutzrohr und der Prozessumgebung spielen alle entscheidende Rollen. Für eine zuverlässige Temperaturbestimmung ist es wichtig, dass der jeweilige Temperatursensor und das Medium sich zumindest für eine bestimmte Zeit, welche zur Erfassung der Temperatur erforderlich ist, im Wesentlichen im thermischen Gleichgewicht befinden.

In diesem Zusammenhang ist es einerseits vorteilhaft, wenn der Temperatursensor vermittels eines Schutzrohrs in das jeweilige Medium eintaucht, da sich auf diese Weise eine vergleichsweise gute Kopplung zwischen dem Medium und dem Temperatursensor erzielen lässt. Je nach dem Temperaturbereich des Mediums und einer Temperaturdifferenz zwischen der Temperatur des Mediums und der Umgebungstemperatur kann es aber auch vermittels des Messeinsatzes und Schutzrohrs zu unerwünschter Wärmeleitung vom Medium zu außerhalb des Prozesses angeordneten Komponenten oder anders herum kommen. In beiden Fällen führt die unerwünschte Wärmeleitung zu einem Wärmeableitfehler und damit zu einer erheblichen Verringerung der Messgenauigkeit. Die Problematik betrifft ferner insbesondere die Anwendung bei kryogenen, also tiefen Temperaturen.

Die deutsche Patentanmeldung DE 25 49 619 A1 offenbart eine Anordnung mit einem Behältnis und mit einem Schutzrohr mit einer Einlassöffnung und einer Auslassöffnung, die auf einander gegenüberliegenden Seiten des Schutzrohrs angeordnet sind, so dass der Messeinsatz umströmt wird.

Auch die japanische Patentanmeldung JP 2002 310806 A offenbart eine Anordnung mit einem Behältnis und mit einem Schutzrohr mit einer Einlassöffnung und einer Auslassöffnung, die auf einander gegenüberliegenden Seiten des Schutzrohrs angeordnet sind.

Keine dieser Anordnungen wird bei kryogenen Anwendungen eingesetzt.

Der Erfindung liegt die Aufgabe zugrunde, die Messgenauigkeit bei der Verwendung von Feldgeräten mit Schutzrohren bei kryogenen Anwendungen zu verbessern.

Diese Aufgabe wird gelöst durch die Anordnung nach Anspruch 1.

Erfindungsgemäß umfasst eine Vorrichtung der Anordnung zur Bestimmung und/oder Überwachung zumindest einer Prozessgröße eines Mediums in einem Behältnis der Anordnung ein Schutzrohr umfassend ein rohrförmiges, insbesondere zylindrisches, Element und einen Messeinsatz, welcher der Bestimmung und/oder Überwachung der Prozessgröße dient und in dem Schutzrohr aufgenommen ist, und wobei das rohrförmige Element derart an dem Behältnis befestigt ist, dass das rohrförmige Element zumindest teilweise in ein Innenvolumen des Behältnisses hineinragt. Erfindungsgemäß weist das rohrförmige Element des Schutzrohrs eine Einlassöffnung und eine Auslassöffnung auf, welche Einlassöffnung und Auslassöffnung auf einander gegenüber liegenden Seiten des rohrförmigen Elements angeordnet sind.

Die Auslassöffnung ist in einem ersten, insb. distalen, Endbereich des rohrförmigen Elements angeordnet, welcher erste Endbereich dem Medium zugewandt ist und die Einlassöffnung ist in einem zweiten, insb. proximalen, Endbereich des rohrförmigen Elements angeordnet, welcher zweite Endbereich dem Behältnis zugewandt ist.

Es ist ebenfalls denkbar, das Schutzrohr mit mehreren, sich insbesondere an unterschiedlichen Positionen befindenden, Öffnungen zu versehen. Vorzugsweise ist dann jedoch die Auslassöffnung die am weitesten von der Wandung des Behältnis entfernteste Öffnung.

Die Einlassöffnung und die Auslassöffnung befinden sich beide in einem Bereich des Schutzrohrs, welcher sich im in das Behältnis eingebrachten Zustand des Schutzrohrs innerhalb des Behältnisses befindet. Durch die Öffnungen kann also Medium in ein Innenvolumen des Schutzrohrs ein- und ausdringen. Durch den Fluss von Medium zumindest in einem Teilbereich des Innenvolumens des Schutzrohrs können mit Wärmeleitung verbundene Effekte deutlich reduziert werden.

Das Behältnis ist beispielsweise gegeben durch einen Behälter oder durch eine Rohrleitung. Im Falle einer von einem Medium durchströmten Rohrleitung ist es beispielsweise von Vorteil, wenn die Einlassöffnung im an der Rohrleitung befestigten Zustand des Schutzrohrs einer Strömungsrichtung des Mediums zugewandt ist, und wenn die Auslassöffnung im an der Rohrleitung befestigten Zustand des Schutzrohrs einer Strömungsrichtung des Mediums abgewandt ist.

Gemäß der Erfindung sind die Einlassöffnung und/oder die Auslassöffnung derart angeordnet und/oder ausgestaltet, dass der Messeinsatz im in das rohrförmige Element eingebrachten Zustand von dem Medium umströmt wird. Das Umströmen des Messeinsatzes innerhalb des Schutzrohrs führt zu einer verbesserten Messperformance hinsichtlich der Bestimmung und/oder Überwachung der Prozessgröße.

Das Schutzrohr ist derart von unten in die das Behältnis eingebaut, dass die Einlassöffnung an dem zweiten, insb. proximalen, Endbereich des rohrförmigen Elements unterhalb der Auslassöffnung an dem ersten, insb. distalen, Endbereich des rohrförmigen Elements angeordnet ist. Mittels des Einbaus von unten steigen entstehende Gasblasen in dem Schutzrohr auf und gelangen durch die Auslassöffnung aus dem Schutzrohr hinaus.

Bei dem Einbau von unten ist ein eingeschlossener Winkel zwischen der Lotrichtung und einer von dem ersten, insb. distalen Endbereich zu dem zweiten, insb. proximalen, Endbereich zeigenden Längsrichtung zwischen 0° und 90°. Bei Einbringung des Schutzrohrs und/oder der Vorrichtung mittels eines Aufnahmestutzens liegt dann beispielsweise ein Winkel zwischen einer Längsachse des Aufnahmestutzens und einer gedachten horizontalen Linie in einem Intervall zwischen 0° und -90°. Das Schutzrohr und die Vorrichtung werden demnach derart in das Behältnis eingebracht, dass im eingebauten Zustand des Schutzrohrs und der erste Endbereich des Schutzrohrs und der Vorrichtung am höchsten liegt, bezogen auf eine vertikale gedachte Linie.

Die Einlassöffnung ist an dem zweiten, insb. proximalen, Endbereich des rohrförmigen Elements unterhalb der Auslassöffnung an dem ersten, insb. distalen, Endbereich des rohrförmigen Elements angeordnet. Mittels des Einbaus von unten steigen entstehende Gasblasen in dem Schutzrohr auf gelangen durch die Auslassöffnung aus dem Schutzrohr hinaus.

Eine Ausgestaltung der Erfindung beinhaltet, dass die Einlassöffnung und/oder die Auslassöffnung derart angeordnet und/oder ausgestaltet sind, dass im an dem Behältnis befestigten Zustand des rohrförmigen Elements und im in das rohrförmige Element eingebrachten Zustand des Messeinsatzes im Bereich der Einlassöffnung ein vorgebbarer Staudruck vorherrscht. Die Einlassöffnung bildet in diesem Falle demnach einen Staupunkt für das Medium. Diese Ausgestaltung ist besonders vorteilhaft bei Verwendung eines Behältnisses in Form einer Rohrleitung. Aber auch bei Behältern kann ein Staudruck im Bereich der Einlassöffnung zustande kommen, beispielsweise im Falle von kryogenen Medien.

Eine Ausgestaltung für das Schutzrohr beinhaltet, dass die Einlassöffnung und/oder die Auslassöffnung im Bereich einer Mantelfläche des rohrförmigen Elements angeordnet ist/sind.

Zumindest eine der Öffnungen kann auch im Bereich einer Stirnfläche des rohrförmigen Elements angeordnet sein. Dadurch wird das Messelement von der, vorzugsweise im Bereich der Mantelfläche angeordneten, Einlassöffnung hin zur stirnseitig angeordneten Auslassöffnung umflossen. Typischerweise ist das Sensorelement des jeweils verwendeten Messeinsatzes im Bereich der Stirnfläche des Schutzrohrs angeordnet, wenn der Messeinsatz in das Schutzrohr eingebracht ist. Durch diese Maßnahmen kann also gewährleistet werden, dass das Messelement nicht von einer Wärmeableitung beeinflusst wird.

Eine Ausgestaltung beinhaltet, dass das rohrförmige Element im Bereich einer Stirnfläche, welche im an dem Behältnis befestigten Zustand des rohrförmigen Elements dem Medium zugewandt ist, verschlossen ist. In diesem Falle ist die Auslassöffnung im Bereich der Mantelfläche des rohrförmigen Elements angeordnet.

Es ist jedoch ebenfalls denkbar, dass das Schutzrohr, insbesondere das rohrförmige Element, im Bereich der dem Medium zugewandten Stirnfläche geöffnet ist. In diesem Falle ist es von Vorteil, wenn die Auslassöffnung im Bereich der Stirnfläche, welche im an dem Behältnis befestigten Zustand des rohrförmigen Elements dem Medium zugewandt ist, angeordnet ist.

Eine weitere Ausgestaltung sieht vor, dass die Stirnfläche des rohrförmigen Elements abgeschrägt ist, und dass insbesondere im Falle, dass das Behältnis eine Rohrleitung oder ein Messrohr ist, das Schutzrohr derart an dem Behältnis befestigbar ist, dass die Abschrägung im an dem Behältnis befestigten Zustand des Schutzrohrs einer Strömungsrichtung des Mediums abgewandt ist. Eine derartige Maßnahme kann den jeweils vorherrschenden Staudruck erhöhen.

Schließlich umfasst das Schutzrohr noch in einer Ausgestaltung der Anordnung einen Befestigungseinsatz zur Befestigung eines Thermometers in einem Rohrstutzen eines Messrohrs, umfassend
- ein Halteelement zur Befestigung des Thermometers an dem Befestigungseinsatz, und
- eine Arretierung, welche dazu ausgestaltet ist, eine Rotationsbewegung des Thermometers relativ zum Messrohr zu verhindern,
wobei der Befestigungseinsatz derart ausgestaltet und/oder angeordnet ist, dass der Befestigungseinsatz parallel zu einer Längsachse durch den Rohrstutzen beweglich ist. Ein derartiger Befestigungseinsatz dient der Vermeidung sich nachteilig auswirkender vortex induzierter Vibrationen und berücksichtigt insbesondere die besonderen mit Anwendungen bei tiefen Temperaturen einhergehenden Probleme, wie beispielsweise unterschiedlicher Wärmausdehnungskoeffizienten der unterschiedlichen Komponenten des Thermometers oder auch von Wärmleiteffekten. In diesem Zusammenhang sei auf die bisher unveröffentlichte, deutsche Patentanmeldung mit dem Aktenzeichen 102020109424.8 verwiesen.

Die erfindungsgemäße Vorrichtung der Anordnung ist beispielsweise ein Feldgerät mit einer Sensoreinheit und einer Elektronik. Insbesondere handelt es sich um ein Thermometer zur Bestimmung und/oder Überwachung der Temperatur mit einem Temperatursensor, beispielsweise in Form eines Widerstandselements oder Thermoelements.

In einer weiteren Ausgestaltung der Anordnung ist/sind das Schutzrohr und/oder die Vorrichtung derart ausgestaltet, dass das Schutzrohr und/oder die Vorrichtung in einem Aufnahmestutzen des Behältnisses befestigbar ist/sind.

Im Falle eines Behältnisses in Form einer Rohrleitung ist es in dieser Hinsicht beispielsweise von Vorteil, wenn die Anordnung ferner ein Messrohr zum Führen des Mediums umfasst, wobei das Messrohr einen Rohrleitungsabschnitt und einen Rohrstutzen zur Aufnahme der Vorrichtung aufweist, und wobei eine Längsachse des Rohrleitungsstutzens einen vorgebbaren Winkel, insbesondere einen Winkel von im Wesentlichen 90°, zu einer Längsachse des Rohrleitungsabschnitts aufweist. Es handelt sich in diesem Falle bei dem Messrohr beispielsweise um ein T-Stück. Alternativ sind aber auch andere Konfigurationen für das Messrohr denkbar, wie zum Beispiel eine Ausgestaltung in Form eines Eckstücks.

Die Erfindung wird anhand der nachfolgenden Figuren näher erläutert. Es zeigt:
Fig. 1 ein Thermometer mit Schutzrohr gemäß Stand der Technik,
Fig. 2 eine erste Ausgestaltung einer erfindungsgemäßen Anordnung mit einem stirnseitig verschlossenem Schutzrohr,
Fig. 3 eine zweite Ausgestaltung einer erfindungsgemäßen Anordnung mit einem stirnseitig geöffneten Schutzrohr,
Fig. 4 eine dritte Ausgestaltung einer erfindungsgemäßen Anordnung mit einem stirnseitig geöffneten Schutzrohr und einer Abschrägung,
Fig. 5 eine vierte Ausgestaltung einer erfindungsgemäßen Anordnung mit einem stirnseitig geöffneten Schutzrohr und einer Abschrägung, und
Fig. 6 eine schematische Darstellung des Temperaturprofils mit einem erfindungsgemäßen Schutzrohr.

In den Figuren werden gleiche Elemente mit demselben Bezugszeichen versehen. Die nachfolgende Beschreibung bezieht sich ohne Beschränkung der Allgemeinheit der der Erfindung zugrundeliegenden Idee auf Messanordnungen zur Bestimmung und/oder Überwachung der Temperatur. Ebenso beschränkt sich die nachfolgende Beschreibung beispielhaft auf den Fall eines Behältnisses in Form einer Rohrleitung. Es versteht sich von selbst, dass ein erfindungsgemäßes Schutzrohr aber auch mit anderen Arten von Behältnissen Verwendung finden kann.

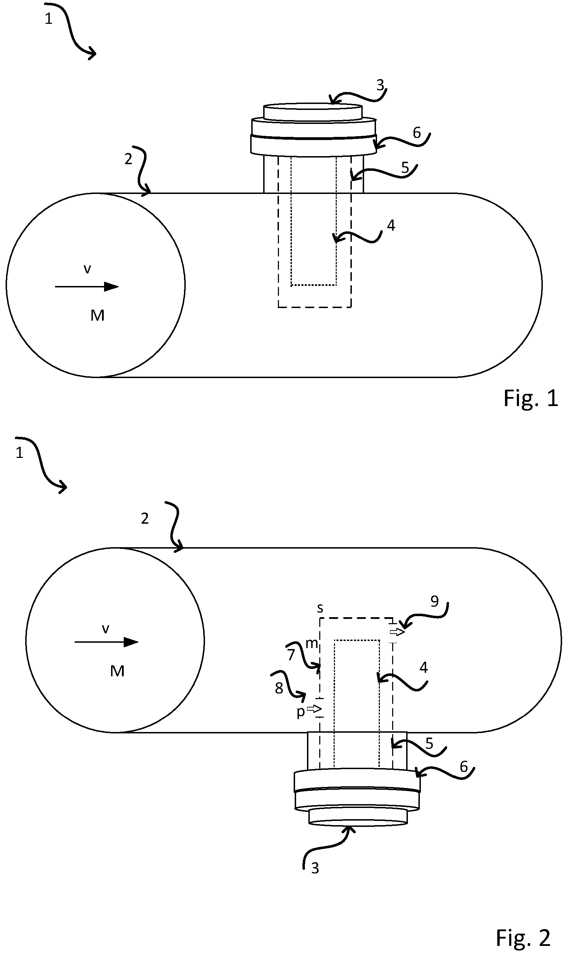

Fig. 1 zeigt eine Anordnung 1 zur Bestimmung und/oder Überwachung der Temperatur T eines Mediums M in einer Rohrleitung 2, welches die Rohrleitung 2 mit einer Strömungsgeschwindigkeit v durchströmt. Die Anordnung 1 umfasst eine Vorrichtung 3 zur Bestimmung und/oder Überwachung der Temperatur T in Form eines Thermometers mit einem Messeinsatz 4, in welchem ein hier nicht separat dargestellter Temperatursensor angeordnet ist. Der Messeinsatz 4 ist in einem Schutzrohr 5 angeordnet, welches mittels einen an der Rohrleitung 2 befestigten Aufnahmestutzen 6 in die Rohrleitung 2 eingebracht ist.

Um für Anwendungen im Bereich tiefer bzw. kryogener Temperaturen eine möglichst hohe Messgenauigkeit zu erreichen, werden entsprechende Anordnungen typischerweise mit einer Isolierung von der Umgebung abgeschirmt. Trotzdem kommt es bei derartigen Anordnungen zu unerwünschter Wärmeleitung von der Umgebung zum Messeinsatz. Hierbei spielen die in der Regel aus einem Metall bestehenden Befestigungseinheiten zur Befestigung des Thermometers 3 an der Rohrleitung 2 eine entscheidende Rolle. Entsprechend ist üblicherweise der ermittelte Messwert für die Temperatur zu hoch.

Bei Anwendungen im Bereich kryogener Temperaturen kommt es zusätzlich aufgrund von teilweise Verdampfung des Mediums aufgrund der großen Temperaturunterschiede der Temperaturen des Messeinsatzes und der des Mediums zur Bildung von Gasblasen. Die Gasblasen steigen nach oben und sammeln sich im Innenvolumen des Aufnahmestutzens. Der Stutzen wird dann weniger oder gar nicht mehr von flüssigem Medium umströmt und sorgt für einen weiteren unerwünschten Wärmeeintrag bei der Temperaturbestimmung vermittels des Messeinsatzes.

Derartige Probleme können mittels einer erfindungsgemäßen Anordnung 1 mit einem erfindungsgemäßen Schutzrohr 5 behoben werden. Eine erste Ausgestaltung für eine Anordnung 1 mit einem erfindungsgemäßen Schutzrohr 5 ist in Fig. 2 dargestellt.

Das Schutzrohr 5 umfasst ein rohrförmiges Element 7 mit einer Einlassöffnung 8 und einer Auslassöffnung 9, welche auf einander gegenüber liegenden Seiten des rohrförmigen Elements 7 angeordnet sind. Die Einlassöffnung 7 ist für diese beispielhafte Ausgestaltung der Strömung v des Mediums M zugewandt; die Auslassöffnung 8 ist der Strömung v abgewandt. Das rohrförmige Element 7 ist stirnseitig s verschlossen und die beiden Öffnungen 8,9 sind im Bereich der Mantelfläche m des rohrförmigen Elements 7 angeordnet. Dabei ist die Einlassöffnung 8 in einem einer Wandung der Rohrleitung 2 zugewandten Bereich eingebracht, während die Auslassöffnung 9 in einem dem Medium M bzw. der Stirnfläche s zugewandten Bereich angeordnet ist. Im Bereich der Einlassöffnung 8 entsteht ein Staudruck p, woraus ein Druckunterschied innerhalb des Schutzrohrs 5 resultiert. Es findet eine erzwungene Konvektion und damit einhergehend eine Durchströmung eines Innenvolumens des Schutzrohrs 5 und des Messeinsatzes 4 erreicht. Dadurch wird von außen in den Prozess eingetragene Wärme effektiv abgeführt. Dies wiederum führt zu einer deutlich erhöhten Messgenauigkeit.

Durch den Einbau von unten, also mit einem Winkel von im Wesentlichen 90° zwischen einer gedachten horizontalen Linie und einer Längsachse des Einbaustutzens 6 bzw. Schutzrohrs 4, so dass ein eingeschlossener Winkel zwischen der Lotrichtung und einer von dem ersten Endbereich zu dem zweiten Endbereich zeigenden Längsrichtung des Schutzrohrs 5 im Wesentlichen 0° beträgt, können jeweils entstehende Gasblasen aufsteigen und gelangen durch die Auslassöffnung 9 aus dem Schutzrohr 5 hinaus. Die entstehenden Verdampfungsprozesse weisen sogar höhere Wärmeübertragungskoeffizienten auf als die erzwungene Konvektion des Mediums. Die Abführung der Gasblasen bewirkt somit eine hoch effektive Kühlung des Messeinsatzes. Idealerweise können nachteilige Effekte von durch die Umgebung eingetragener Wärme im Wesentlichen vollständig vermieden werden, weil Druck und Temperatur über die Dampfdruckkurve direkt miteinander verknüpft sind. Diese Maßnahme sorgt demnach für eine weitere Steigerung der Messgenauigkeit bei der Temperaturbestimmung.

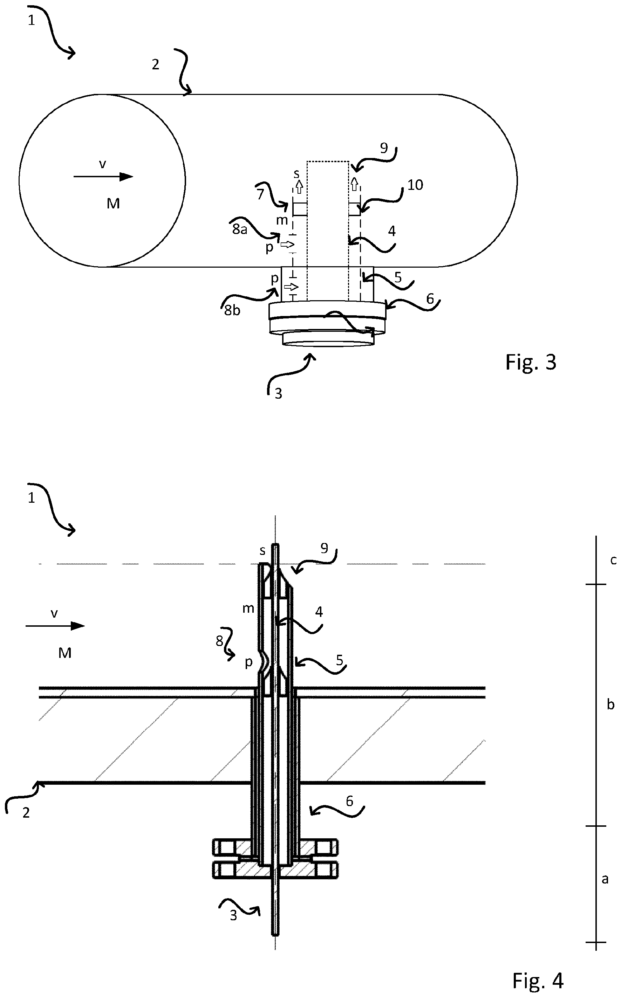

Eine weitere, beispielhafte Ausgestaltung für eine erfindungsgemäße Anordnung 1 ist in Fig. 3 dargestellt. Im Unterschied zu der in Fig. 2 gezeigten Ausgestaltung ist im Falle der Fig. 3 das rohrförmige Element 7, also das Schutzrohr 5, im Bereich der Stirnfläche s geöffnet und der Messeinsatz 4 ragt für die hier gezeigte Ausgestaltung beispielhaft aus dem Schutzrohr 5 heraus. Der Messeinsatz 4 ist somit länger ausgeführt als das Schutzrohr 5. Die Auslassöffnung 9 befindet sich also im Bereich der Stirnfläche s. Außerdem verfügt das Schutzrohr 5 hier über zwei Einlassöffnungen 8a, 8b. Die zweite Einlassöffnung 8b befindet sich im in die Rohrleitung 2 eingebrachten Zustand im Bereich eines Innenvolumens des Aufnahmestutzens 6. Dies verringert negative Effekte durch Gasblasen noch stärker.

Dadurch, dass der Messeinsatz 4 aus dem Schutzrohr 5 hinausragt, wird der Messeinsatz 4, insbesondere in dem Bereich, in dem sich der Temperatursensor befindet, direkt von dem strömenden Medium M umströmt. Auch durch diese Maßnahme wird die Messgenauigkeit einer erfindungsgemäßen Anordnung also erhöht.

Zur Vermeidung von vortex induzierten Vibrationen umfasst die Anordnung 1 ferner einen Befestigungseinsatz 10. Dieser umfasst zumindest eine hier nicht gezeigte Öffnung, damit das Medium M durch das Innenvolumen des Schutzrohrs 5 durchströmen und das Schutzrohr 5 durch die Auslassöffnung 9 verlassen kann.

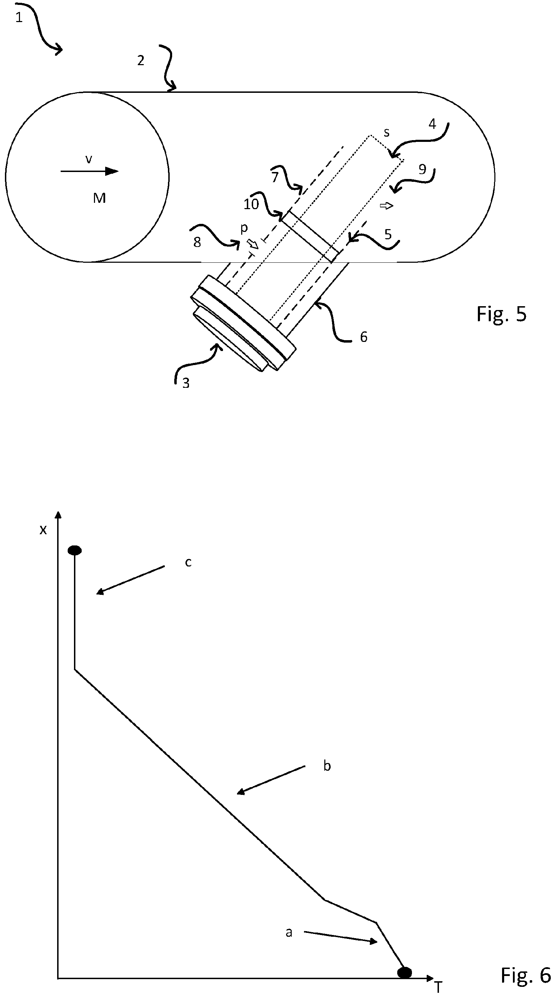

Bei der Ausgestaltung gemäß Fig.4 ist die Stirnfläche s zudem abgeschrägt, wobei die Abschrägung dem Medium M abgewandt ist. Auch ist ein Einbau in einem anderen Winkel zwischen der Lotrichtung und der von dem ersten Endbereich zu dem zweiten Endbereich zeigenden Längsrichtung als 0° wie es für die vorangegangenen Figuren der Fall ist, möglich. Eine solche Ausgestaltung ist beispielhaft in Fig. 5 illustriert. Zudem kann anstelle einer Anordnung in Form eines T-Stücks auch eine Anordnung in Form eines Eckstücks realisiert werden. Es sei schließlich auch darauf verwiesen, dass andere Ausgestaltungen auch mehr als eine Auslassöffnung 9 aufweisen können.

In Fig. 6 ist schließlich eine schematische Darstellung eines Temperaturprofils T(x) als Funktion der Position entlang der Längsachse bei einem vertikalen Einbau der Vorrichtung 3 mit dem Schutzrohr 5, wie in Fig. 4 dargestellt, gezeigt. In Fig. 4 ist eine vertikale Linie zu sehen, welche eine Zuordnung der Bereiche a,b,c des Temperaturprofils zu entsprechenden Bereichen der Anordnung 1 vornimmt. Der Bereich a betrifft den Bereich des Aufnahmestutzens 6, also den Bereich des Prozessanschlusses. Der Bereich b betrifft den Bereich innerhalb des Schutzrohrs 5 und der Bereich c betrifft den dem Medium M zugewandten Bereich, insbesondere jenen Bereich, in welchem der Messeinsatz 4 aus dem Schutzrohr 5 hinausragt.

Während im Bereich a das Temperaturprofil von Wärmeleitung innerhalb des Prozessanschlusses dominiert wird, findet im Bereich b eine Kühlung durch Konvektion und Verdampfung statt. Im Bereich c ist das Temperaturprofil nahezu unabhängig von der genauen Position x und die mittels des Thermometers 3 gemessene Temperatur T entspricht im Wesentlichen der Temperatur des Mediums M.

### Bezugszeichen

1 Anordnung
2 Rohrleitung
3 Vorrichtung zur Bestimmung und/oder Überwachung einer Prozessgröße
4 Messeinsatz
5 Schutzrohr
6 Aufnahmestutzen
7 Rohrförmiges Element
8 Einlassöffnung
9 Auslassöffnung
10 Befestigungseinsatz

M Medium
T Temperatur
v Strömungsgeschwindigkeit
x Position entlang einer vertikalen Achse durch die Anordnung
a,b,c verschiedene Bereiche der Anordnung

## Patentansprüche

1. Anordnung, umfassend
- eine Vorrichtung (3) zur Bestimmung und/oder Überwachung zumindest einer Prozessgröße (T) eines Mediums (M) in einem Behältnis (2) mit einem Schutzrohr (5), welches Schutzrohr (5) ein rohrförmiges, insbesondere zylindrisches, Element (7) umfasst, und mit einem Messeinsatz (4), welcher der Bestimmung und/oder Überwachung der Prozessgröße dient und in dem Schutzrohr (5) aufgenommen ist,
- und ein Behältnis (2) mit einem darin angeordneten Medium (M), wobei das rohrförmige Element (7) derart an dem Behältnis (2) befestigt ist, dass das rohrförmige Element (7) zumindest teilweise in ein Innenvolumen des Behältnisses (2) hineinragt,
wobei das rohrförmige Element (7) eine Einlassöffnung (8) und eine Auslassöffnung (9) aufweist, welche Einlassöffnung (8) und Auslassöffnung (9) auf einander gegenüber liegenden Seiten des rohrförmigen Elements (7) angeordnet sind,
wobei die Einlassöffnung (8) und/oder die Auslassöffnung (9) derart angeordnet und/oder ausgestaltet sind, dass der Messeinsatz (4) von dem Medium (M) umströmt wird,
wobei die Auslassöffnung (9) in einem ersten Endbereich des rohrförmigen Elements (7) angeordnet ist, welcher erste Endbereich dem Medium zugewandt ist,
wobei die Einlassöffnung (8) in einem zweiten Endbereich des rohrförmigen Elements (7) angeordnet ist, welcher zweite Endbereich dem Behältnis zugewandt ist,
**dadurch gekennzeichnet, dass**
das Schutzrohr (5) derart von unten in das Behältnis (2) eingebaut ist, dass ein eingeschlossener Winkel zwischen der Lotrichtung und einer von dem ersten Endbereich zu dem zweiten Endbereich zeigenden Längsrichtung des Schutzrohrs (5) zwischen 0° und 90° beträgt,
so dass die Einlassöffnung (8) an dem zweiten, insbesondere proximalen, Endbereich des rohrförmigen Elements (7) unterhalb der Auslassöffnung (9) an dem ersten, insbesondere distalen, Endbereich des rohrförmigen Elements (7) angeordnet ist, so dass entstehende Gasblasen in dem Schutzrohr (5) aufsteigen und durch die Auslassöffnung (9) aus dem Schutzrohr (5) hinausgelangen.

2. Anordnung nach Anspruch 1,
wobei die Einlassöffnung (8) und/oder die Auslassöffnung (9) derart angeordnet und/oder ausgestaltet sind, dass im Bereich der Einlassöffnung (8) ein vorgebbarer Staudruck (p) vorherrscht.

3. Anordnung nach zumindest einem der vorherigen Ansprüche,
wobei die Einlassöffnung (8) und/oder die Auslassöffnung (9) im Bereich einer Mantelfläche (m) des rohrförmigen Elements (7) angeordnet ist/sind.

4. Anordnung nach zumindest einem der vorherigen Ansprüche,
wobei das rohrförmige Element (7) im Bereich einer in dem ersten, insb. distalen Endbereich, angeordneten Stirnfläche (s) verschlossen ist.

5. Anordnung nach zumindest einem der Ansprüche 1 bis 3,
wobei die Auslassöffnung (9) im Bereich der Stirnfläche (s) angeordnet ist.

6. Anordnung nach Anspruch 4 oder 5,
wobei die Stirnfläche (s) des rohrförmigen Elements (7) abgeschrägt ist, und im Falle, dass das Behältnis (2) eine Rohrleitung oder ein Messrohr (2) ist, das Schutzrohr (5) derart an dem Behältnis (2) befestigt ist, dass die Abschrägung des Schutzrohrs (5) einer Strömungsrichtung (v) des Mediums (M) abgewandt ist.

7. Anordnung nach Anspruch 1, wobei es sich bei dem Behältnis um eine von einem Medium durchströmten Rohrleitung oder Messrohr handelt und
- die Einlassöffnung (8) einer Strömungsrichtung (v) des Mediums zugewandt ist, und
- die Auslassöffnung der Strömungsrichtung (v) des Mediums abgewandt ist.

8. Anordnung nach zumindest einem der vorherigen Ansprüche,
umfassend einen Befestigungseinsatz (10) zur Befestigung eines Thermometers (3) in einem Rohrstutzen (6) eines Messrohrs, umfassend
ein Halteelement zur Befestigung des Thermometers (3) mittels des Befestigungseinsatzes, und
eine Arretierung, welche dazu ausgestaltet ist, eine Rotationsbewegung des Thermometers (3) relativ zum Messrohr zu verhindern,
wobei der Befestigungseinsatz (10) derart ausgestaltet und/oder angeordnet ist, dass der Befestigungseinsatz (10) parallel zu einer Längsachse des Rohrstutzens durch den Rohrstutzen (6) beweglich ist.

9. Anordnung nach Anspruch 1
wobei das Schutzrohr (5) und/oder die Vorrichtung (3) mittels eines Aufnahmestutzens (6) des Behältnisses (2) an dem Behältnis (2) befestigt sind.

## Claims

1. An arrangement, comprising
- a device (3) for determining and/or monitoring at least one process variable (T) of a medium (M) in a container (2) with a protective tube (5), said protective tube (5) comprising a tubular, in particular cylindrical, element (7), and with a measuring insert (4), which is used to determine and/or monitor the process variable and is mounted in the protective tube (5),
- and a container (2) with a medium (M) arranged inside it, wherein the tubular element (7) is attached to the container (2) in such a way that the tubular element (7) at least partially protrudes into an internal volume of the container (2),
wherein the tubular element (7) has an inlet opening (8) and an outlet opening (9), said inlet opening (8) and outlet opening (9) being arranged on opposite sides of the tubular element (7),
wherein the inlet opening (8) and/or the outlet opening (9) is/are arranged and/or
configured in such a way that the medium (M) flows around the measuring insert (4),
wherein the outlet opening (9) is arranged in a first end area of the tubular element (7), said first end area facing toward the medium,
wherein the inlet opening (8) is arranged in a second end area of the tubular element (7), said second end area facing toward the container,
**characterized in that**
the protective tube (5) is installed in the container (2) from below in such a way that an included angle between the vertical direction and a longitudinal direction of the protective tube (5) extending from the first end area to the second end area is between 0° and 90°,
so that the inlet opening (8) at the second, in particular proximal, end area of the tubular element (7) is arranged below the outlet opening (9) at the first, in particular distal, end area of the tubular element (7), so that any gas bubbles produced rise in the protective tube (5) and escape from the protective tube (5) through the outlet opening (9).

2. The arrangement as claimed in claim 1,
wherein the inlet opening (8) and/or the outlet opening (9) is/are arranged and/or configured in such a way that there is a specifiable back pressure (p) in the area of the inlet opening (8).

3. The arrangement as claimed in at least one of the preceding claims,
wherein the inlet opening (8) and/or the outlet opening (9) is/are arranged in the area of an outer surface (m) of the tubular element (7).

4. The arrangement as claimed in at least one of the preceding claims,
wherein the tubular element (7) is sealed in the area of an end face (s) arranged in the first, in particular distal, end area.

5. The arrangement as claimed in at least one of claims 1 to 3,
wherein the outlet opening (9) is arranged in the area of the end face (s).

6. The arrangement as claimed in claim 4 or 5,
wherein the end face (s) of the tubular element (7) is angled and, in the event that the container (2) is a pipeline or a measuring tube (2), the protective tube (5) is attached to the container (2) in such a way that the angled end face (s) of the protective tube (5) faces away from a flow direction (v) of the medium (M).

7. The arrangement as claimed in claim 1, wherein the container is a pipeline or measuring tube through which a medium flows and
- the inlet opening (8) faces toward a flow direction (v) of the medium, and
- the outlet opening faces away from the flow direction (v) of the medium.

8. The arrangement as claimed in at least one of the preceding claims,
comprising a mounting insert (10) for mounting a thermometer (3) in a tube adapter (6) of a measuring tube, comprising
a retaining element for mounting the thermometer (3) using the mounting insert, and
a locking mechanism, which is configured to prevent a rotational movement of the thermometer (3) relative to the measuring tube,
wherein the mounting insert (10) is configured and/or arranged in such a way that the mounting insert (10) can be moved through the tube adapter (6) parallel to a longitudinal axis of the tube adapter.

9. The arrangement as claimed in claim 1,
wherein the protective tube (5) and/or the device (3) is/are attached to the container (2) using a mounting adapter (6) of the container (2).

## Revendications

1. Arrangement, comprenant
- un dispositif (3) destiné à la détermination et/ou à la surveillance d'au moins une grandeur de process (T) d'un produit (M) dans un réservoir (2) avec un doigt de gant (5), lequel doigt de gant (5) comprend un élément tubulaire, notamment cylindrique (7), et avec un insert de mesure (4) qui sert à déterminer et/ou à surveiller la grandeur de process et lequel insert est logé dans le doigt de gant (5),
- et un réservoir (2) avec un produit (M) disposé à l'intérieur, l'élément tubulaire (7) étant fixé au réservoir (2) de telle sorte que l'élément tubulaire (7) pénètre au moins partiellement dans un volume intérieur du réservoir (2), l'élément tubulaire (7) présentant une ouverture d'entrée (8) et une ouverture de sortie (9), lesquelles ouverture d'entrée (8) et ouverture de sortie (9) sont disposées sur des côtés opposés de l'élément tubulaire (7),
l'ouverture d'entrée (8) et/ou l'ouverture de sortie (9) étant disposées et/ou conçues de telle sorte que l'insert de mesure (4) est entouré par le produit (M),
l'ouverture de sortie (9) étant disposée dans une première zone d'extrémité de l'élément tubulaire (7), laquelle première zone d'extrémité est orientée vers le produit,
l'ouverture d'entrée (8) étant disposée dans une deuxième zone d'extrémité de l'élément tubulaire (7), laquelle deuxième zone d'extrémité est orientée vers le réservoir,
**caractérisé en ce que**
le doigt de gant (5) est monté dans le réservoir (2) par le dessous de telle sorte qu'un angle inclus entre la direction perpendiculaire et une direction longitudinale du doigt de gant (5) orientée de la première zone d'extrémité vers la seconde zone d'extrémité est compris entre 0° et 90°,
de telle sorte que l'ouverture d'entrée (8) dans la deuxième zone d'extrémité, notamment proximale, de l'élément tubulaire (7) est disposée en dessous de l'ouverture de sortie (9) dans la première zone d'extrémité, notamment distale, de l'élément tubulaire (7), de telle sorte que les bulles de gaz qui se forment montent dans le doigt de gant (5) et sortent du doigt de gant (5) par l'ouverture de sortie (9).

2. Arrangement selon la revendication 1,
pour lequel l'ouverture d'entrée (8) et/ou l'ouverture de sortie (9) sont disposées et/ou conçues de telle sorte qu'une pression dynamique (p) prédéfinissable règne dans la zone de l'ouverture d'entrée (8).

3. Arrangement selon au moins l'une des revendications précédentes,
pour lequel l'ouverture d'entrée (8) et/ou l'ouverture de sortie (9) est/sont disposée(s) dans la zone d'une surface d'enveloppe (m) de l'élément tubulaire (7).

4. Arrangement selon au moins l'une des revendications précédentes,
pour lequel l'élément tubulaire (7) est fermé dans la zone d'une surface frontale (s) disposée dans la première zone d'extrémité, notamment distale.

5. Arrangement selon au moins l'une des revendications 1 à 3,
pour lequel l'ouverture de sortie (9) est disposée dans la zone de la surface frontale (s).

6. Arrangement selon la revendication 4 ou 5,
pour lequel la surface frontale (s) de l'élément tubulaire (7) est biseautée, et dans le cas où le réservoir (2) est une conduite ou un tube de mesure (2), le doigt de gant (5) est fixé au réservoir (2) de telle sorte que le biseau du doigt de gant (5) est détourné du sens d'écoulement (v) du produit (M).

7. Arrangement selon la revendication 1, pour lequel le réservoir est une conduite ou un tube de mesure traversé par un produit, et
- l'ouverture d'entrée (8) est tournée vers un sens d'écoulement (v) du produit, et
- l'ouverture de sortie est détournée du sens d'écoulement (v) du produit.

8. Arrangement selon au moins l'une des revendications précédentes,
lequel arrangement comprend
un insert de fixation (10) destiné à la fixation d'un capteur de température (3) dans un raccord (6) d'un tube de mesure,
un élément de retenue destiné à la fixation du capteur de température (3) au moyen de l'insert de fixation, et
un dispositif d'arrêt, lequel est conçu pour empêcher un mouvement de rotation du capteur de température (3) par rapport au tube de mesure,
l'insert de fixation (10) étant conçu et/ou disposé de telle sorte que l'insert de fixation (10) est mobile parallèlement à un axe longitudinal du raccord à travers le raccord (6).

9. Arrangement selon la revendication 1,
pour lequel le doigt de gant (5) et/ou le dispositif (3) sont fixés au réservoir (2) au moyen d'un raccord de fixation (6) du réservoir (2).
